# EUROPEAN PATENT SPECIFICATION

(11) **EP 3 035 605 B1**
(45) Date of publication and mention of the grant of the patent: **13.03.2019**
(21) Application number: 15199525.5
(22) Date of filing: 11.12.2015
(51) Int. Cl.: H04L 12/40, H04L 12/413

(54) **VARIABLE DATA RATE CONTROL PROTOCOL**
STEUERUNGSPROTOKOLL MIT VARIABLER DATENRATE
PROTOCOLE DE COMMANDE DE DÉBIT DE DONNÉES VARIABLE

(30) Priority: 15.12.2014 AU 2014905076
(43) Date of publication of application: 22.06.2016
(73) Proprietor: Schneider Electric (Australia) Pty Limited, NSW 2113 MacQuarie Park (AU)
(72) Inventor: Terrace, Donald Murray, Macquarie Park, New South Wales 2113 (AU); Kammermann, Daniel, Macquarie Park, New South Wales 2113 (AU)
(74) Representative: Manitz Finsterwald Patentanwälte PartmbB

(56) References cited:
- EP-A1- 2 712 123
- DE-A1-102012 224 031
- US-A1- 2014 328 357
- Robert Bosch Gmbh: "CAN with Flexible Data-Rate Specification Version 1.0", , 17 April 2012 (2012-04-17), XP055047460, Gerlingen, Germany Retrieved from the Internet: URL:http://can-newsletter.org/assets/files /ttmedia/raw/e5740b7b5781b8960f55efcc2b93e df8.pdf [retrieved on 2012-12-11]

## Description

This disclosure relates to a protocol capable of varying the effective bandwidth of transmissions in a packet switched base band signalling communication network. The features of the preamble of the independent claim are known from EP 2 712 123 A1.

### BACKGROUND

A typical electrical control system for home and building installation comprises a quantity of electrical and/or electrically controlled devices designed to be controlled such as: electrical switches and sockets; electrical loads of various types (e.g. lighting, heating, cooling and various motorised devices); and protective devices such as miniature circuit breakers, residual current breakers, fuses etc.

A control system in such an installation comprises one or more, devices including transceiver devices associated with one or more of the above mentioned electrical devices, the transceivers typically being connected in parallel via a communications medium. For the sake of simplicity and cost it is typical for the communication medium to comprise a broadcast datagram (signal) means over two wires. Power may also be delivered over those two wires, or may be provided separately. The two-wire means may be provided with shielded or unshielded twisted pair. Various topologies such as bus, star, ring, mesh and/or a mixture of the above topologies can be used with this communications medium.

Each device in the network comprises a transceiver for receiving and transmitting data signals, a computer device for receiving data and sending data of its own volition dependent on programs stored therein and storage means to maintain various data (e.g. the status of other devices in the network), and control circuit means for controlling electrical devices (e.g. lights, switches, power loads) associated therewith. Each device in the network is adapted and arranged to exchange data signals via the communications medium in one example, a two-wire means.

By linking the various devices it is possible to control and manage the various apparatus associated with each device each of which are controlled independent of the other. The exchange of information between the devices is an important element in the control of devices on the network and exchange of information in digital form to facilitate and manage control is typical.

It is desirable to design digital signals transmission to minimise information exchange errors at the data rate most suited to do so. However, the communications medium has an inherent upper bandwidth for the quantity of digital information which it can carry with reasonable reliability at any one time. Therefore, there are a number of digital transmission techniques and protocols which can be utilised to share the available bandwidth of the communications medium amongst the numerous and various types of devices distributed over the network.

A digital data communication technique used in such networks is known as Carrier Sense, Multiple Access, with Collision Detection (CSMA/CD) and is most commonly used wherever data is communicated between one of many devices distributed over a physical network. A further enhancement of the CSMA/CD scheme is to include some form of Collision Avoidance (CA) so that the inevitable collision of digital data frames results in neither loss of usable transmission time nor loss of data.

CSMA/CD CA does not require any central coordination, so it is well suited to a home building electrical control system using a fixed digital data exchange rate for communicating information between distributed intelligent devices, such as those described above. However, in a bandwidth limited network using, for example, the type of two-wire medium described above, CSMA/CD is not necessarily optimally configured for the best use of the available transmission bandwidth within the full duration of the transmission of a data frame.

The usable bandwidth of the communications medium to convey digital information between the devices is dependent of various factors, such as the signalling scheme used, available signal processing power in the devices and network topology factors like total length, number of attached devices, type and impedances of the cabling, and loads that the devices place on the network, etc. The choice of constraints on the limits of all these factors and others can be used to define the chosen signalling rate.

The Collision Detection and Collision Avoidance scheme employed on the CSMA communication medium may require that the chosen signalling rate to ensure reliable Collision Detection and Collision Avoidance in a broadcast sense for a worst-case network topology is less than the actual unicast bandwidth available between two devices on the network.

The broadcast bandwidth of a CSMA communication medium may be defined as the transmission signalling rate at which good reliability of reception can be achieved by all devices given the chosen network topology constraints without Collision Detection and Collision Avoidance.

The actual unicast bandwidth available from one device on the network to another device on the network (point-to-point) may be the same or much higher than the broadcast bandwidth. Additionally, this actual bandwidth may not be symmetrical i.e. it may be faster in one direction than the other, due to factors such as the physical characteristics of the network and the relative locations of the two communicating devices and other factors.

Networks use a predetermined data rate that ensures all devices can communicate with all other devices no matter where they are in the network and consequently ignore the possibility of using higher data rates to accommodate what is considered unchangeable constraints to the physical system that makes up the network.

### SUMMARY

The present invention is defined in the appended independent claim to which reference should be made. Advantageous features are set out in the appended dependent claims. It is proposed that it is possible to arrange for there to be a protocol which can use the existing network bandwidth limitations for transmission during at least the bus contention period (note that the term bus contention period herein refers to a period of time during which the Collision Detection and Collision Avoidance scheme is active), after which the remaining portion of the data should be collision-free but allow for a choice of signalling rate within the frame after that bus contention period for the payload data to be transmitted, thus allowing the use of a different data rate in parts of a frame.

In addition to the possible advantages gained by making best use of available but otherwise not used network bandwidth capability at different parts of the transmission of a frame, any protocol enhancements should be compatible with existing installed devices and associated controllable arrangements, so that a system existing in a network can be upgraded, by adding one or more of the devices and associated controllable arrangements which can transmit and receive both the original standard (typically lower) data rate as well as the newer (typically higher) data rate transmissions, at the convenience of the owner of the network without a cost burden associated with replacement or the upgrading of all existing devices or associated controllable arrangements.

Throughout this specification and the claims that follow unless the context requires otherwise, the words 'comprise' and 'include' and variations such as 'comprising' and 'including' will be understood to imply the inclusion of a stated integer or group of integers but not the exclusion of any other integer or group of integers.

The reference to any background or prior art in this specification is not, and should not be taken as, an acknowledgment or any form of suggestion that such background or prior art forms part of the common general knowledge.

Suggestions and descriptions of other embodiments may be included within the disclosure but they may not be illustrated in the accompanying figures or alternatively features of the disclosure may be shown in the figures but not described in the specification.

The steps of a method or algorithm described in connection with the embodiments disclosed herein may be embodied directly in hardware, in a software module executed by a processor, or in a combination of the two. For a hardware implementation, processing may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof. Software modules, also known as computer programs, computer codes, or instructions, may contain a number a number of source code or object code segments or instructions, and may reside in any computer readable medium such as a RAM memory, flash memory, ROM memory, EPROM memory, registers, hard disk, a removable disk, a CD-ROM, a DVD-ROM or any other form of computer readable medium. In the alternative, the computer readable medium may be integral to the processor. The processor and the computer readable medium may reside in an ASIC or related device. The software codes may be stored in a memory unit and executed by a processor. The memory unit may be implemented within the processor or external to the processor, in which case it can be communicatively coupled to the processor via various means as is known in the art.

It will be appreciated by those skilled in the art that the embodiments are not restricted in its use to the particular application described. Neither are the presented embodiments restricted in their preferred embodiments with regard to the particular elements and/or features described or depicted herein. It will be appreciated that various modifications can be made without departing from the principles disclosed. Therefore, the embodiments should be understood to include all such modifications within their scope.

### BRIEF DESCRIPTION OF THE FIGURES

Fig. 1 depicts a basic layout of a plurality of devices arranged in a network interconnected by a pair of wires;
Fig. 2 depicts a CSMA/CD CA digital data frame, including acknowledgement;
Fig. 3 depicts a variable data rate (high speed) frame including acknowledgements according to an embodiment;
Fig. 4 depicts the details of the variable data rate (high speed) setup block for the variable data rate (high speed) frame according to an embodiment;
Fig 5 depicts the details of the variable data rate (high speed) payload block for the variable data rate (high speed) frame according to an embodiment;
Fig. 6 depicts a timing diagram of a slot containing transmitted variable data rate (high speed) data according to an embodiment illustrating the incorporation into the slot data transmitted at the standard data rate (low speed) to serve as a maintain media busy signal and payload data transmitted at a higher data rate compared to the data rate used during the bus contention period;
Fig. 7 depicts an example of a High Speed Control Block; and
Fig. 8 depicts an example of a Negative Acknowledgement Block;
Fig. 9 depicts an example of the signaling of the Negative Acknowledgement from a device to the transmitting device; and
Fig. 10 depicts an example of the result of receiving one of the possible NACK responses indicating that at best, in this example, 24 times the standard data rate is possible for transmission of the payload and that in another example, 8 times the standard data rate is possible.

### DETAILED DESCRIPTION OF EMBODIMENTS

It is useful to be able to selectively replace or upgrade devices at minimal cost and inconvenience to the operation of the network to allow there to be an to increase in the data rate of the exchange of data between new or upgraded devices on the network as the need for increased data arises due to changing demands.

There are times when, it is beneficial or of high importance to upgrade the firmware and/or configuration used by one or more of the devices or for many other reasons or needs, it is necessary or desirable for the update to be sent over the existing network, as out-of-band interfaces may be unavailable or inconvenient. In one example, the firmware of a device on a home and building network will inevitably need to be updated to improve the security of the device and in another example a device which is controlled on the network needs updated, for example firmware to perform a new function, or the configuration parameters of the device, need to be changed. The data comprising the update would need to be sent over the network at the normal signalling rate which is typically suitable for the control functions of the devices associated with a device and used to control those devices. The data rates for such home and building networks are generally low (as compared to most dedicated computer to computer communication data rates or even wireless data communication rates) and generally transfer low quantities of data between devices with an emphasis on accuracy over data rate because of the high level or surety of the data. However, these are very low quantities of data compared to the quantity of data required to perform a firmware update, and as a result the process of updating one or more devices on the network would result in an unacceptably long update time and/or an unacceptably high network utilisation potentially leading to the loss of utility of the other devices on the network during the firmware update. Once it is possible to transmit large amounts of data at an acceptably higher data rate, it is possible for the network to be used for many purposes not previously envisioned, such as the transmission of audio, video, bulk data etc.

The communication of data in a packet switched base band signaling communication network is done at a known data rate to all devices on the network. A network will have multiple devices, each device comprising at least a transmitter and a receiver capable of transmitting and receiving data (sometimes referred to as frames or blocks of data or messages) for all the other devices wherein the base band signaling to communicate the data includes a maintain-media-busy signal issued from a transmitting device. The maintain-media-busy signal can take many forms and its primary purpose is to indicate to other devices that the network is in use by only one transmitting device wherein the transmitting device transmits that data at the known data rate to be received by one or more other devices.

CSMA/CD (carrier sense multiple access/collision detection) is a widely used protocol (i.e., set of rules) for determining how network devices in the network communicate data in a message and respond in the event of a collision. A collision occurs when two or more devices on a network attempt to transmit at the same time over a single physical medium (e.g., a twisted pair copper wire cable or an optical fibre cable) simultaneously. It is detected by all participating devices connected to that medium, and, after a brief, random and different interval of time (sometimes referred to as a back-off delay or a contention delay) has elapsed for each device, the devices attempt to transmit again. If another collision occurs, the time intervals from which the random waiting times are selected are increased step-by-step in a process referred to as exponential back off so that one of the devices that has a need to transmit is eventually able to achieve a collision-free transmission.

CSMA/CD is a modification of pure CSMA. Carrier sense refers to the fact that a transmitting device listens for a carrier wave (i.e., a waveform that carries a signal or signals) before attempting to transmit. That is, it first tries to detect the presence of an encoded signal from another device. If a carrier is sensed, the device waits for the transmission in progress to finish before starting its own transmission.

Multiple access, describes the fact that multiple devices send and receive on the physical medium. Transmissions by one device are generally received by all other devices using that physical medium in a broadcast fashion.

Collision detection is used to improve CSMA performance by terminating transmission by a device as soon as a collision is detected, and reducing the probability of a second collision on the next try. The techniques used for detecting collisions depend on the type of physical medium: in the case of electrical wires, for example, collisions are detected by comparing the transmitted data with the received data.

CSMA/CD operates at the physical layer which is the bottom level in the OSI model, which is used to standardize and simplify definitions with regard to computer networks. This layer defines all physical and electrical specifications for devices used to interface to the network, and it deals with data only in terms of raw bits formed into frames or message formats (there may be different formats).

A major feature of CSMA/CD is that it is simple to implement. This has helped make it an international standard and an important part of Ethernet systems which are the preferred architecture for LANs (local area networks) but is also widely used in closed networks such as in home and building automation and factory environments.

Some networks such as CANbus protocol can operate at different data rates, but that network requires all devices connected to the network to operate at the same data rate in order to guarantee communication. The network data rate is chosen to suit the installation, and once selected, is not likely to change. CANbus systems are better known for use in automobiles but also have use in home and building automation and factory environments.

We describe herein a method comprising some steps which can be used in a protocol that allows selective relatively higher data rate transfer for a particular frame (or message) transmitted from a device within a network of devices which otherwise operate at a lower and usually fixed data rate between all devices (sometimes referred to herein as the standard data rate). Herein the term lower data rate is relative and meant to inform the reader that there is a difference between what might one day be commonly understood to be a low or high data rate. In the future what was once the highest data rate may become the lowest standard data rate usable between devices. It may also be that the data rate used between one device and another device is different in one frame to the next and it may also be that data sent from one device to another is transmitted at a different rate to that which the other device transmits in return.

The steps can be incorporated into a variety of frame (message) formats. However, there will be some common aspects, including a maintain-media-busy signal and an idle media determination process and associated period.

In a relatively low data rate baseband communication system, communication of serial data streams makes use of some encoding which defines bit-times in terms of a set of fixed periods. Communication is possible if all members of a network are capable of accepting the same bit-times, and while entire systems are often capable of operating at a variety of different bit-times, however those bit-times are generally uniform throughout a communication network wherein a bit-time is the atomic (the minimum period within which a digital data bit is transmitted) period used for data bit formation and transmission using a particular bit signal encoding scheme.

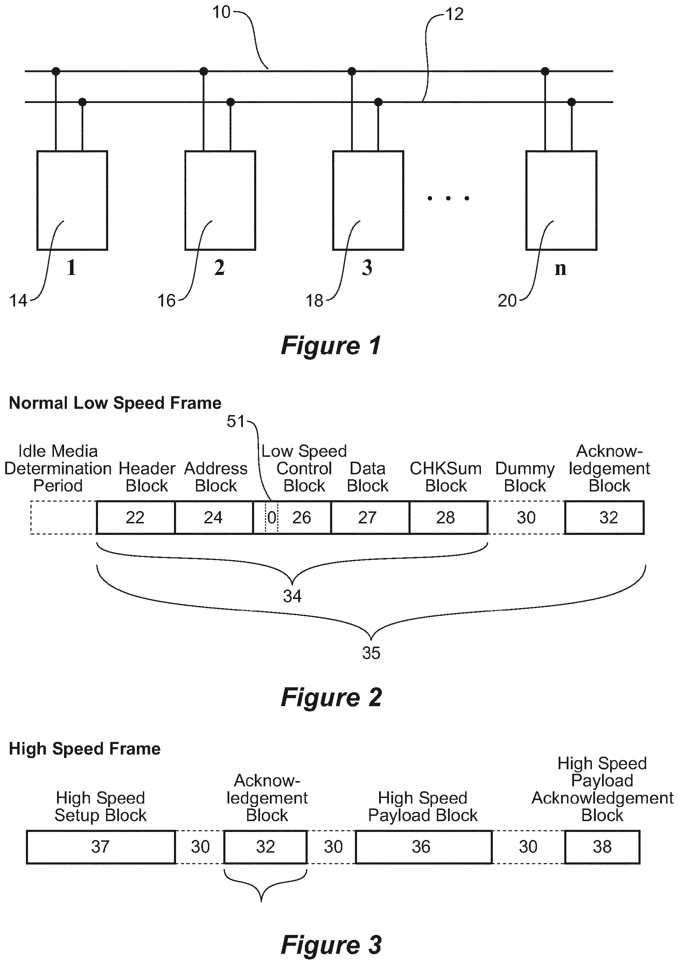

A large variety of information, control, and management systems utilising packet switched communication networks some with two-wire power and communication mediums are used for an equally large variety of applications. In particular, packet switched networks which operate on a level above the Network Access, Data Link and Physical layers are being used more often in the residential, commercial building and industrial buildings construction industry to support building control management systems. Convenient to install and relatively cheap form of communication medium are used is the physical transport mechanism is building and industrial environments and a one of the common forms comprises pairs of electrical conductors, sometimes multiple pairs in the same casing and typically each pair is twisted as are the multiple pairs. This type of cabling is typically certified (CAT 5, CAT5e, CAT 6, etc.) and thus have specified communication characteristics. These wired mediums allow for ease of connection and routing for new and existing buildings, and in some configurations simple tap-in line connections are attachable at any point along the pair of conductors, as depicted pictorially in Figure. 1.

Figure 1 depicts an embodiment of a physical network, including wires 10 and 12 providing a medium for the communication of signals to the devices 14, 16, 18 and 20 which are distributed as required along the length of the wires 10 and 12. Power may also be provided on that medium, or separately.

The following information is provided to assist the reader to understand some of the terms used in this specification. The information is not meant to be definitive but should assist a skilled reader to sort and apply the information that makes up the disclosure provided in the specification.

Slot: period of time during which an atomic transmission may occur. In byte-oriented protocols this would normally contain one or perhaps more bytes of data, plus any signalling information such as parity for error detection. In an example C-Bus ™ (Schneider Electric (Australia) Pty Ltd 33 Port Wakefield Road, Gepps Cross, South Australia) system, a slot contains 1 byte (8 bits) of data and 1 parity bit for odd parity.

Frame: a sequence of consecutive slots containing valid transmissions or dummy (note comments below) slots, and which comprises a message and zero or more acknowledgement blocks.

Clock: a signal generated at regular intervals by typically one device on the network to synchronize communications through indication of the beginning of a new slot. In the example C-Bus system, there is a clock signal, and it is generated at a rate of 1 every 2ms. It is convenient, but not essential to have a clock and it is not essential to the method and arrangement disclosed in this specification.

Dummy slot: A slot that is vacant, containing no transmission of data.

Dummy block: One or more consecutive dummy slots. In the example C-Bus system, dummy blocks can be used to provide information e.g. a dummy block comprising a single dummy slot can be used to separate different sections of a frame.

Maintain Media Busy Signal: a scheme to ensure that a valid transmission is distinguishable from an idle bus. In the example C-Bus system an idle bus is distinguishable from a transmission of a "0" byte by the use of an odd parity bit in each slot, which means for any valid transmission there is always at least 1 valid "1" bit in the slot. It could otherwise be achieved using "1" parity i.e. always transmitting a "1" bit at a defined point in the transmission, but this is less useful as it does not provide the useful error-detecting information which the odd parity arrangement does. In other protocols there are other ways in which a maintain busy signal can be generated.

Idle Media Determination Period: a period of time during which the bus appears to be idle, after which the bus is assumed by convention to actually be idle. In the example C-Bus system, the Idle Media Determination Period is defined as a dummy block comprising 2 or more consecutive dummy slots.

Bus Contention Period: Period of time during which one or more devices on a CSMA/CD CA network may be transmitting simultaneously. In the example C-Bus system, the Collision Detection mechanism is achieved by each transmitting device monitoring the signal on the bus in real time as it transmits. If at any point there is a "1" condition on the bus where the transmitting device is transmitting a "0", then the collision is detected. The Collision Avoidance mechanism is then for the transmitting device that detects the collision to cease transmitting, allowing the other device(s) that was (were) transmitting a "1" at that point to dominate and continue transmitting without error. The last device transmitting that does not detect a collision is said to have won or be the winning device and that device's message will be sent on the network.

In an embodiment the digital data exchange protocol is preferably of the CSMA/CD CA type, of which Fig. 2 depicts a frame being a message containing a data payload, where in this example, the control block 26 (within the frame information portion 34) of the frame contains an indication (e.g. a value set to '0') meaning that this frame signals to other devices that the device transmitting the frame is going to transmit onto the network and has control (in that no other device will also transmit) for at least the duration of that frame and that the data payload will be transmitted at a data rate the same as the standard data rate.

However, when required, and as part of the protocol proposed, there can be another type of frame, as depicted in Figures 3, 4 and 5, where the control block 25 of the frame contains a different indication (e.g. a value is not set equal to '0' but set e.g. to '1'), and which is transmitted by the initiating device during the control block 25 and received by any and all devices within the network to, indicate there will be a portion of the frame (the payload) at the new data rate, where the new data rate is higher than the rate used within that frame before commencement of transmission of the payload.

The new data rate may be fixed by convention, or may be indicated within the control block of the frame, or the data rate could be decoded using knowledge of the encoding scheme employed and clock recovery, or the new rate may have been determined by previous data communications on the network. More about the actual methods of data rate determination and use, hence a protocol embodying the arrangement is to be described later in the specification.

Fig. 2 depicts a frame comprising header block 22, address block 24, control block 26 (containing the indication 50), data block 27, and checksum block 28 all making up block 34 which is the transmitted message and then followed by dummy block 30, and then finally an acknowledgement block 32 making up a complete acknowledged communication frame 35 using a standard data rate transmission.

Each block in a frame may comprise zero or more slots, and may appear in different order in different protocols. There can be variations of the arrangement of blocks within a frame.

Acknowledgement blocks may be said to be positive, indicating successful reception and processing of the message or negative, indicating a failure of some sort, and potentially including data indicating the reason for the failure.

For example purposes only and not meant to be restrictive of the scope of the claimed invention, the frame depicted in Figure 2 is typical of the C-Bus network communications arrangement primarily because it uses a dummy block comprising a single dummy slot as a marker of the end of a series of blocks, but which is not necessarily used in other network communication arrangements or protocols and further when a frame is preceded or followed by two consecutive dummy slots then the network will commence to function again, wherein the multiple devices will begin to contend for control of the network. In essence the timed length of a dummy block comprising two consecutive dummy slots is equal to the idle media determination period as agreed between the devices which abide by and use a preferred protocol, being that period of time during which all the receivers of all the devices are monitoring the network to determine whether the media (network) is busy. Since during the time of two consecutive dummy slots there is no activity on the network, all the receivers of all the devices will know that the media is not only not busy but is also available for transmission from one or more transmitters of one or more devices to transmit a frame containing a payload of data addressed to one or more devices on the network.

Common to most protocols is a manner by which one of the devices contends for control of the network in order to transmit. Consequently there will be different periods of contention not only using a particular protocol but also when using a different protocol, that is used to determine that there is only one transmitter transmitting on the network, i.e. the winning device, because all other devices wanting to transmit have also been receiving with their respective receiver and determined that they have received a signal while they were transmitting. The previous description is but one of a variety of bus contention methodologies used in one or more different protocols.

Thus Figure 2 is indicative of the complete transmitted frame using a standard data rate message containing a data payload transmitted at that same standard data rate. A standard data rate in C-Bus during transmission of information is 5405 baud but the term standard is not mean to indicate that all network communication systems (other networks not C-Bus) transmit and receive at that particular data rate. Nor is it meant to indicate that there is only one data rate usable by a network since there are networks which are capable of using more than one data rate but only if all the devices are using that one of more than one data rate at the same time and if the data rate is to be changed all devices need to be coordinated to do so. For the purposes of the understanding of the arrangements disclosed in this specification, the term standard or first data rate is used to represent the data rate that is common to all devices.

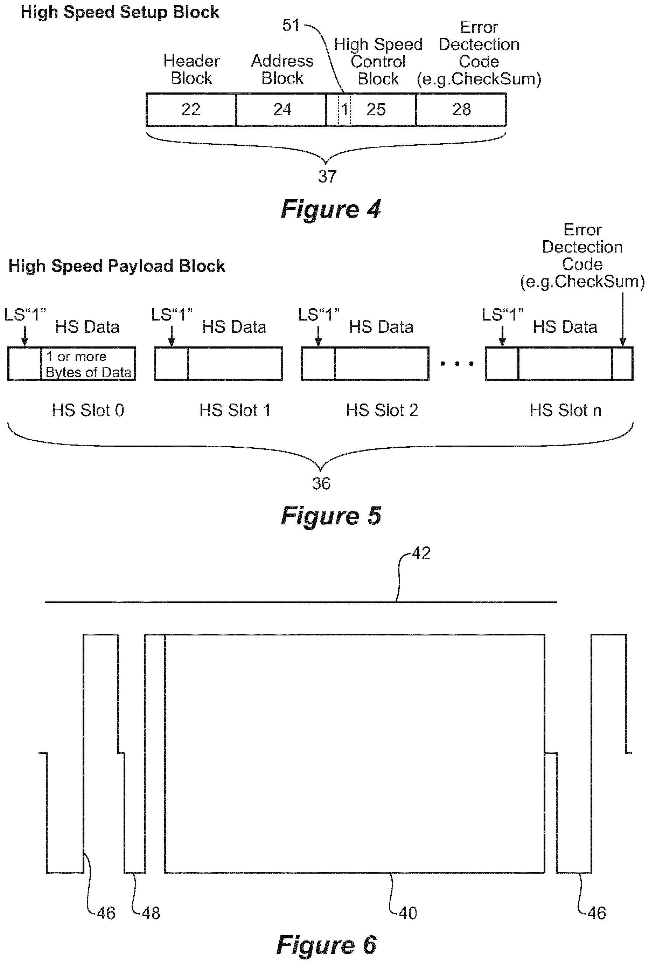

Included in the high speed set-up block 37 of Figure 4 of this embodiment, is a control block 25 and within that block, at least in this embodiment there is an indication 51, that the remainder of the message or frame having this type of control block will include a portion in which data will be transmitted, at a rate which is the standard data rate or a higher data rate than the rate used in the foregoing portion of the message. This indication takes the form of a '1' bit 51 located within the control block 25 in Figure 4 and incorporated within the high speed set-up block 37 of Figure 3 that distinguishes this frame from a standard low speed frame depicted in Figure 2 in which the control block 26 contains a "0" bit at the same point in the frame.

In Figure 3, the high speed set-up block 37 is used to represent the combination of the header block 22, address block 24, control block 25 (containing the indication 51) and checksum block 28 as depicted in Figure 4. Figure 3 also contains dummy block 30 after the high speed set-up block 37, itself followed by the acknowledgement block 32, both of which are equivalent in purpose to dummy block 30 and block 32 depicted in Figure 2.

Figure 3 also depicts additional blocks 36 and 38 added after block 32 and including a total of three "dummy blocks" 30 between block 34 and 32, between block 32 and block 36, and between block 36 and 38.

In this embodiment, the dummy block 30 is a vacant slot (includes no data), used to indicate the end of a previous section of the frame before the next section begins. In some protocols use of such dummy blocks may be unnecessary. In the example C-Bus network, the idle media determination period is a dummy block comprised of 2 or more successive dummy slots and is a particular feature of the C-Bus embodiment. However, the idle media determination period may be different in other protocols, but will always be used after the final block of the frame is transmitted and received by the receiver, i.e. after block 32 for protocols that have such an acknowledgement block. Then once the devices on the network determine that the bus is idle the bus contention period begins since multiple devices may start transmitting and eventually one of them will win. That is, the bus contention period is very different in function and can be very different in actual time elapsed to the idle media determination period.

In some protocols, a preamble block (not shown) may exist within or before the header block but the preamble does not usually convey any information but is instead may be used to perform: clock recovery; a function related to assisting the resolution of contention between more than one of the device, such as by including a priority determination bit or byte; and to warm up the clock recovery circuits ready to receive the rest of the frame that comes after the preamble block.

The header block 22 may or may not exist and is provided to include information about the type of frame to follow, and also can provide priority information relating to the message and how it should be treated by devices on the network or status of the frame.

Address block 24 is used to define the intended destination device or devices on the network for this frame. The address block may also provide information about the identification of the transmitting device so that a reply can be returned to the transmitting device.

Control block 26 is depicted in the frame shown in Figure 2 and control block 25 is depicted in Figure 4. The control block contains information directed to the destination device and/or all devices and their associated device arrangements that relates to how that frame is to be interpreted. This block contains the result of the step of a method, in which the protocol can include extra information such as an indicator, in one embodiment, the indicator is indicative of the presence of higher data rate data or standard data rate data in a following portion of that frame. The or other indicators can indicate, alternate encoding methods, alternate checksum methods and/or the length for the higher data rate data portion of this variable data rate frame.

Data block 27 includes the payload of the message. In Figure 2 the data block 27 is part of the transmitted message 34. In the case where as in Figure 4 the control block 25 includes and indicator that there will be a higher data rate data block 36 (payload) to follow as depicted in Figure 3.

Checksum block 28 in both Figures 2 and 4 is included for the benefit of the destination device or devices, which provides error-detection code for the relevant portion of the frame being transmitted. The algorithm for this code may, be a simple sum or a hash or a cyclic redundancy check code of suitable bit length or any other error detection code.

The single low speed message block 34 depicted in Figure 2 and high speed set-up block denoted 37 Figures 3 and 4 is used to represent the combination of blocks 22, 24, 25/26, 27 (in the case of Figure 2 only) and 28; and in Figure 4 where the set-up (information) frame portion 37 contains a control block 25 that indicates 51 the presence of higher data rate payload data to follow, the set-up frame portion in this embodiment comprises a Higher data Rate Setup block within the more universally named frame information portion.

In a C-Bus network the acknowledgement block 32 (Figures 2 or 3) comprises an allocated time period within which one or more receiving devices can transmit a code indicating that they received the frame information portion 37 with or without errors and as will be described later transmit a nonnegative acknowledgement (NAK) containing additional information relating the respective receiver's ability to receive the data at a particular data rate.

In a CSMA/CD network, during the transmission of the frame, all devices on the network other than the one involved with the current transmission hold off any pending transmissions until a time after the end of the current transmission of that frame, that time being at least the media-idle determination period (which as described previously is at least a period of time shorter than the period of two dummy blocks) and then the Bus Contention period begins, as described previously.

By the time the higher data rate setup block 37 and its acknowledgement block 32 is complete, the Bus Contention Period is over and in a CSMA/CD using CA the Collision Avoidance obligations should be fulfilled, thus freeing the network for transmission of the higher data rate portion from CA-based timing constraints, and permitting a higher signalling rate to be used that is closer to the broadcast network bandwidth (for a broadcast message) or to the point-to-point network bandwidth (for a point-to-point message, where point-to-point is device to device).

Devices not involved with the transmission are unable or not required to decode the message (except possibly the fact that there is a higher data rate being transmitted or in the case of receivers only able to receive the standard data rate it may seem that there are no transmissions on the network) and they may or may follow the progress of the transmission to determine the end of transmission. Devices meant to receive the transmission send an appropriate acknowledgment block of data 32 in the case of a standard (low) rate transmission; and an appropriate acknowledgment block of data 38 (being different to 32) after the additional higher data rate data blocks are sent and received. However, if the devices not involved with the transmission are unable to decode the frame (since they do not detect the data being sent at the higher data rate), they continue to determine the busy status of the communication medium by other means as described in this specification. In one case, if odd parity or an asserted parity bit is enforced by the communication protocol the existence of transmission on the network can be detected by the presence of any data '1' bits, as or by using fill bits within the frame as in the CANbus protocol. The step of transmitting a signal at the standard data rate, so that so that all devices know the network is busy, is thus part of the method described in this specification.

Manchester encoding can be used but is one of many of the available encoding schemes known to those of skill in the art -selected on the basis of say maintaining direct current (dc) balance, or other such criteria of importance to the network being used. A 7B/9B or a 8B/10B encoding scheme for higher data rate data encoding is preferred and media-busy may be detected by observing transitions of the signals used to encode using these, and possibly other schemes, on the communication medium, although if the higher data rate is sufficiently faster than the legacy (also referring to the 'standard') data rate, low-pass filtering in the legacy receiver circuits of a device, as typically employed by designers skilled in the art, may render the higher data rate data un-detectable, or indistinguishable from noise. Transmitting a "1" bit at the standard (low) transmission rate ensures that all legacy devices will detect that signal and deduce that the bus is a non-idle bus, after which the new higher data rate data may be transmitted without the need to ensure further bit detection by those legacy devices.

Figure 5 depicts one embodiment that is applicable for the C-Bus network arrangement, wherein, the higher data rate payload 36 (Figure 3) is delivered as multiple slots but with the proviso that included in each transmitted slot is a '1' value bit transmitted at the standard data rate to alert all the devices on the network, standard data rate and others that the media is not idle and is busy and under the control of a device which is transmitting information. Figure 5 depicts a plurality of Higher data Rate (HDR) slots, including HS Slot 0, HS Slot 1, HS Slot 2, ... HS Slot n with the last slot including an error detection code (e.g. checksum) pertaining to the high speed payload data..

Detection of a busy communication medium, as described, is part of in the steps of the method, and allows all devices not participating in the current communication to remain idle and not interfere with communication on the available communication medium.

Once the criteria for preventing incorrect detection of an idle communication medium by legacy devices during a the higher data rate portion of the frame is or has been satisfied for a given protocol, e.g. - as in C-Bus by way of example, no apparently empty dummy slots at the legacy signaling rate and that the synchronizing clock is present, all other aspects of the communication within a frame can freely be altered to achieve extended performance.

In an embodiment to achieve higher data rate (HDR), once a single bit within each HDR slot has been achieved according to the strict timing rules of a protocol, the remaining time within each synchronising period may be freely used and encoded in any manner compatible with the constraints of the physical medium, as long as such encoding does not exceed the electrical limitations of the hardware for legacy data receiving devices and associated device arrangements on the same network which are adapted to receive the higher data rate signals.

Fig. 6 depicts a possible encoding method usable in a protocol in which data symbol 48 for a single '1' bit as illustrated by the negative going part of the pulse immediately above the number "48" being the data symbol for a single '1' bit, is positioned after the synchronising clock symbol 46 as illustrated by the negative going part of the pulse immediately above the number "46" being the clock symbol and its associated transition. The data symbol 48 is thus the media busy signal sent using the 'first' rate (also referred to as a standard rate), being the rate of data exchange used between the devices for communication command and control data and not the subsequent higher data rate.

The remaining time 40 within the standard data rate time interval 42 (in this case the synchronisation signal) is therefore available for a suitable data encoding method at a higher data rate than used for the standard data rate device communication. Multiple of such successive synchronisation signals and included higher data rate portions of the frame can be transmitted as depicted in Figure 5.

It may also be possible to decode, in a receiver of a device, the payload data transmitted at the higher data rate indicated within the frame information portion, using a clock signal recovered from the data sent at a higher data rate.

Fig. 3 depicts a high speed communication frame with frame information portion 37 (the high speed setup block), dummy block 30 and acknowledgement block 32, transmitted at the standard data rate, but this time, in response to control information in the control block 25 within frame information portion 37, an additional dummy block 30 and high rate data block (higher than the first rate (standard rate)) 36 are added to the frame. The high speed data payload block 36, which is a portion of the frame in which a block of higher rate data is being communicated at the new higher data rate, may be encoded in a variety of ways and this encoding may be described by some or all of the data encapsulated within the control block 25 of the frame information portion 37.

The higher data rate data block 36 incorporates components to satisfy the rules for busy media in accordance with the requirements of the legacy protocol (as described above by way of an example, in the use of a '1' bit 48 within the period 42 as illustrated in Figure 6), and also allow time to encode data which is additional to the part of the frame transmitted using the legacy protocol, in a manner as defined by the control message in the frame information portion (high speed set-up block 37 preceding it. The high speed payload data block 36 can also include the use of an error detection code (such as a checksum or cyclic redundancy check (CRC)) as is depicted in Figure 5 to aid in detection of errors transmitted within the payload data block 36, and may be followed by another dummy block 30 and a second acknowledgement block 38. Noting that block 32 is a first acknowledgement block to complete the transaction for transmission of block 37 in the event of there being block 36 data to follow, or a negative acknowledgement and no blocks 36, 30 and 38 to follow. If the acknowledgement 32 is positive and block 36 is to follow, then block 38 is a second acknowledgement block but only for acknowledgement of block 36 and has a different format and thus a different meaning to the first acknowledgement block 32. The preceding description is but one example of how higher rate data can be transmitted since there are many different types of acknowledgements (positive and negative) that can be used to deal with the transmission of data between devices.

During a relatively higher data rate communication period within a frame, all compatible devices may preferably be synchronised by that special frame, and/or as well as by a synchronising clock, which is present on the communication medium at all times. The synchronising clock provides a timing reference only and therefore can be generated by a "non-intelligent" clock device located anywhere on the network.

Whilst the non-intelligent clock is sufficient to provide synchronisation for standard data rate communication, and is likely provided by a different device on the network, this may be insufficiently accurate to provide synchronisation for the higher data rate portion of the frame e.g. due to its physical remoteness, data rate effects such as signal propagation delays, etc. Therefore a better means of synchronisation for the higher data rate portion may be the signal for the "1" bit 48 which is generated by the same device that is transmitting the higher data rate frame, and which will have the same network propagation delay at the receiver as does the remaining higher data rate data portion of the frame.

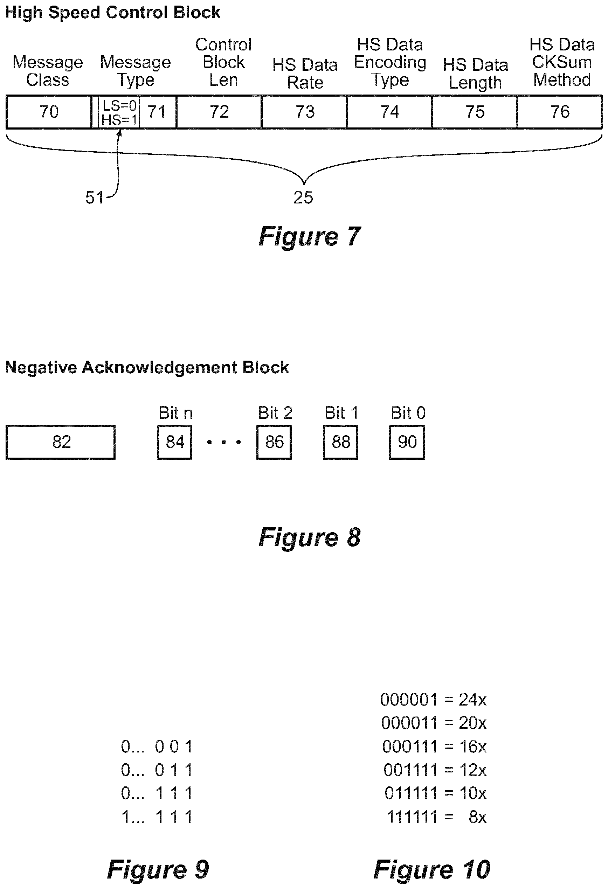

It is preferable for the design of a communication protocol using CSMA/CD and/or CA which uses a higher data rate setup block, to take into consideration certain physical properties of the network, based on rules for its topology, cabling, network and devices impedances etc., such as for example the maximum bandwidth within the known maximum physical length of the two-wire communication medium not only between the most electrically distant devices but also between electrically close devices. Predetermining and using these and other relevant characteristics reduces the probability and/or incidence of timing errors that may occur if either is exceeded or unknown. Furthermore, it is preferable that the high data rate control block (25) of the device requesting a variable data rate (relatively higher data rate) protocol frame, contains sufficient information to allow receiving devices to accept the appropriate information at an appropriate data bit rate and message length as depicted in Figure 7 which also depicts blocks which include message class 70, message type 71 which incorporates the high data rate indicator 51, the control block length 72, the high speed data rate 73, the high speed data encoding type 74, the length of the higher data rate block/s 75 and the error detection code (check-sum) method 76 to be used with the higher data rate. Other than the high data rate indicator 51, some or all of the other information within the high speed control block 25 may optionally be fixed by convention, in which case it need not be specified and may therefore be omitted. These fields, if included, need not appear in the same order as described, but may be ordered freely according to the needs of the protocol designer as long as the compatibility with legacy (low speed) devices is maintained.

The higher data rate is not necessarily a fixed pre-set data rate since the device may be capable of receiving/transmitting two or more data rates, so the initiating device can include data representative of the data rate 73 at which it is going to transmit. Some devices may be able to automatically detect and adapt to any received data rate. The data rate is thus said to be variable but does not generally vary within a frame but could vary from frame to frame but in essence be determined for the particular frame.

Where the higher data rate setup block includes information about the proposed higher data rate transmission, the receiving device(s) may respond with acknowledgement 32 that is positive, or may respond with one or more of several types of negative acknowledgements, including but not limited to negative acknowledgements that mean "higher data rate not supported", "higher data rate supported, but not as high as the high speed setup block indicated", "higher data rate supported, but not as high as the setup block indicated, with a particular maximum data rate", etc.

In an embodiment, the variable data rate (relatively higher data rate) block period is used only by devices addressed as receivers during the normal data rate part of the frame.

Figure 8 depicts a breakdown of an acknowledgement block 32 of Figure 3 that is negative, in an arrangement where the devices which may be able to receive the data transmitted at the higher rate (than the standard rate) comprises in part 82 code indicating "that the device responding understands that a higher speed is being transmitted but the device cannot communicate at that particular date rate". Bit N 84 to bit 2 86, Bit 1 88 and finally Bit 0 90, as depicted in Figure 8, are codes to indicate the fastest data rate at which a respective device can communicate as shown in Figure 9 which shows each device contributing in multiple-access fashion '1' bits to the code if it is not able to receive the particular data rate that was sent, according to each device's maximum supported high speed data rate. Where '1' bits dominate on the bus, the resultant code transmitted onto the will represent the maximum speed that the high speed message may be sent and successfully received. By way of an example, figure 10 depicts a table, representative of an example register of such data, which allows the transmitting device to determine by checking the code in the negative acknowledgement, what is the maximum data rate that is acceptable to all the devices which responded with an ACK or a NAK, to the transmission of a payload in that same frame. Thus as depicted in Figure 9 the receipt of '000001' means, for example that 24 times the standard data rate can be used since all the devices will be capable of receiving data at that rate, while the receipt of a '000011' means that the maximum data rate for transmission is 20 times the standard data rate, etc. till the receipt of '111111' means that the maximum data rate that will be receivable by all the devices, addressed in the block 37, 8 times the standard data rate. This information can be used by the transmitting device to simply send the high speed data payload block 36 at the rate indicated in the negative acknowledgement register, assuming that all of the addressed receiving devices have also read the contents of the negative acknowledgement, or it could be used to simply resend the high speed setup block with an indication of the high speed data rate at the rate indicated in the negative acknowledgement block, followed by the high speed data payload 36 at that rate, if the acknowledgment block 32 is positive as expected.

The type of data that may be provided during a variable data rate (relatively higher data rate) communication block of the frame may comprise any useful data types, including but not limited to normal operational data, firmware upgrade and configuration data of one or more devices or associated apparatus, bulk data transfers, or high bandwidth consuming information such as audio or video to or from a particular device.

It is also possible to meet the communication requirements of relatively low data rate communication within the network and at the same time encode information at a higher rate so that higher data rate capable devices can receive and accept the higher data rate data while the other devices operate at their own relatively lower data rate thus the two types of devices can coexist in the same network.

For each byte of relatively low data rate data for example in a byte-oriented network protocol such as the protocol described by way of example herein, where the Schneider C-Bus protocol is an example, if the higher data rate communication can synchronise to each byte start symbol and insert one valid low data rate bit into each byte that byte can be recognised by legacy devices as a valid communication, and then according to the protocol those devices are unable to participate in the higher data rate exchange and further and necessarily those devices simply assume that the legacy network is busy, when in fact none of the legacy devices are transmitting and those devices that are using the variable data rate (relatively higher data rate) have uninterrupted access to the network.

Figure 6 depicts a slot in a byte-oriented protocol such as the Schneider C-Bus protocol, showing the clock timing used for a lower data rate byte time 42 being the same as used by a lower data rate communication on the network, including a synchronising clock symbol 46. In an embodiment of this invention the synchronising clock 46 (which may be transmitted by the same or a different device on the network to the remainder of the slot) is followed by a single data bit 48 transmitted by the transmitting device in accordance with the normal data rate operation to be received by all devices on the network is included to represent to all other devices in the network a maintain-media-busy signal. Further, in this embodiment the lower speed data bit 48 is followed by the insertion, into the remaining time of the clock synchronisation signal period 42, of a block of data 40 transmitted at the higher data rate. As the Collision Avoidance obligations of the communicating devices are complete at the time the high speed data block is transmitted onto the bus, the edge transitions of data bit 48 may be made sharper, permitting it to be used as the synchronising signal for the data in the remainder of the slot. The signalling rate of the high speed payload data in the slot may be set in accordance with one or many factors, including but not necessarily limited to the actual network physical properties of the communication medium, such as two-wire, which has for example, a known maximum bandwidth operable within the known maximum physical length of the communication medium. If these functional limitations are known then the data rate of the one or more, higher data rates can be predetermined for use within a network protocol, for both broadcast transmissions and point-to-point transmission data can be transmitted at the higher data rate by the winning device.

The actual network bandwidth between a transmitting device and the receiving device may be learnt by the transmitter over successive transmissions based on the success rate vs data rate of previous transmissions, using knowledge of the actual broadcast bandwidth (giving the lower limit of higher data rate signalling that should always succeed) and a maximum signalling rate that the transmitter is configured to use. Higher data rate transmissions that are negatively acknowledged by the receiver with an indication that reception was unsuccessful, yet for which a "higher data rate is supported" acknowledgement was received earlier in the transmission may be retried as is, or at a lower data rate. Once successful transmission and acknowledgement is received the data rate of that successful transmission may be used as the basis for subsequent transmissions, with a learning algorithm to adapt that rate up and down according to prevailing network conditions.

A proposed higher data rate could be part of the bus contention period, so that as well as what has previously been described, the proposed higher data rate can be used to determine the winning transmitter i.e. the fastest transmitter wins over slower transmitters for the one or more receivers capable of receiving at the higher data rate. The protocol in such an arrangement includes in the bus contention period of the frame data representative of a proposed highest data rate at which the winning device can transmit data and only the receivers that can receive that highest data rate data will provide an acknowledgement.

During the time period 40 within the slot, the transmitter of a device is able to send communication at any data rate with the only constraint being the physical properties of the network between the transmitting and receiving devices and not by any conventions of compatibility with the existing devices on the network.

During the time period 40 an encoding standard such as Manchester, 4B/5B, 8B/10B using appropriate code books or any other suitable form of line encoding as used in other serial transmission schemes such as Ethernet can be used to achieve a higher data rate and still preserve the direct current (dc) balance of the network. For other situations where DC balance is not important then yet other schemes will be used.

The information provided in this disclosure could be applied to many packet switched baseband signalling networks to achieve significant increase in data throughput compared with the typical fixed relatively low data rate of such networks. In particular, applying the information disclosed herein to the Schneider C-Bus system and protocol can deliver data at a rate of at least 6 times the normal data rate, and typically 24 times or more for a small network or between adjacent devices on a large network, with the actual rate used able to be varied according to predicted and actual successes in transmissions to and from different devices.

Networks of other types may have different periods (to that disclosed in the embodiments described here) where higher data rate frame segments may exist, but in most cases (as can be readily identified by a person skilled in the art once they have understood this disclosure), once the period of normal data rate of operation has passed, that being the period set as-side for contention between devices to determine which of them is to have sole access the communications network (bus), when it can be guaranteed that only a single transmitter is transmitting, there is an opportunity to implement a relatively higher data rate communication from the initiating device to one or more other devices in the network.

In some networks that use a time division multiplexed communication period with the variable data rate setting frame and when the transmission of data is at a higher data rate there is a time division multiplexed communication period having time slots for each device synchronised by a single clock referred to by the network.

Arranging the protocol so as to use and recognise the bus contention period of the legacy devices while still operating at a relatively low data rate, allows all the devices to participate in the network while making it possible to not only choose a different communication rate for use with compatible devices, but also introduce more robust error-detection protocols during the relatively higher data rate period to allow larger messages to be transmitted in the same time as the legacy system would have used for smaller messages.

It will be readily apparent to those skilled in the art that it may be necessary to ensure that the encoded data in the higher data rate portion of the frame should not be confusable with other valid signals on the network, including the synchronising clock signal if one exists. Thus the encoding scheme (such as the preferred 8B/10B) should be implemented with a code book that, in addition to maintaining correct direct current (dc) balance of the signal, in conjunction with a chosen minimum higher data signalling rate ensures that the high date rate data maintains adequate transitioning rates such that it can never be mistaken for a synchronising clock pulse, thereby ensuring that the legacy (low data rate) devices never get confused about the location of the synchronising clock and potentially initiate communications out of synchronisation.

It is also expected that the receiver and transmitter hardware of existing devices would not require any modification but can still be compatible with a network that has higher data rate data frames but not necessarily being able to decode them unless they are updated or if they are updated they may only be capable of decoding the lower data rates of the range of higher data rates that the newer devices are capable of decoding and or transmitting at.

The protocol described can be used with the Schneider C-Bus protocol and its legacy devices and new higher data rate devices, but is not limited to that network system, and may find application in KNX, CANbus, DALI and other related networking systems protocols.

In a CANbus network, for example, if a device wishing to transmit finds the shared medium in an idle state, it waits for the next slot and starts an arbitration phase by issuing a start- of-frame bit. At this point, each device with a message to be transmitted (e.g., the message may be placed in a peripheral register called TXObject) can start racing to grant access of the shared medium, by serially transmitting the identifier (priority) bits of the message in the arbitration slots, one bit for each slot starting from the most significant. Collisions among identifier bits are resolved by the logical AND semantics, and if a device reads its priority bits on the medium without any change, it realizes it is the winner of the contention and it is granted access for transmitting the rest of the message while the other devices switch to a listening mode. In fact, if one of the bits is changed when reading it back from the medium, this means there is a higher priority (dominant bit) contending the medium and thus the message withdraws. In such an arrangement it is still possible to include data indicative of the data rate of the data being provided by the device, at a location within a frame sent from the device, the location being between the start of the frame and the portion of the frame in which data is transmitted at the higher data rate and by way of example after the maintain-media-busy signal transmitted at the first data rate but it may be that the maintain-media busy signal is transmitted with every block of the payload data or some other arrangement.

## Claims

1. A method for communicating data in a packet switched base band signalling communication network, the network having multiple devices (14, 16, 18, 20), wherein each device comprises at least a data transmitter and a data receiver capable of transmitting and receiving frames comprising payload data at least at a first data rate, the method comprising the steps:
transmitting, by a transmitter of a device of the multiple devices, data (25) at a first data rate in a portion of a frame indicating that the payload data (36) to be transmitted later in the frame will be transmitted at a data rate higher than the first data rate;
**characterized by**
transmitting, by the transmitter of the device, a maintain-media-busy signal, indicating to the other devices of the multiple devices that the network is in use, at the first data rate during the transmission of the payload data (36) at the higher data rate.

2. A method according to claim 1 wherein the frame comprises a frame information portion (34), the method further comprising:
receiving, at a receiver of the device from a transmitter of one or more of the other devices, an indication of the highest data rate the receiver of a respective device can receive, wherein that indication is included in the acknowledgement transmitted back to the receiver of the device in response to receipt of at least a portion of the frame information portion (34) of the frame.

3. A method according to claim 2 comprising the further step
determining from the received one or more acknowledgement indications the higher data rate to use when transmitting the payload data (36).

4. A method according to claim 1 comprising the further steps:
using a rate to transmit payload data (36) at the higher data rate; and
locating a representation of the rate in the frame before the transmission at the payload data (36) at the higher data rate.

5. A method according to claim 1 comprising the further steps:
using an error-detection code to transmit payload data (36) at the higher data rate; and
locating a representation of the error-detection code in the frame before the transmission at the payload data (36) at the higher data rate.

6. A method according to claim 1 comprising the further step:
using an encoding scheme to transmit payload data (36) at the higher data rate; and
locating a representation of the encoding scheme in the frame before the transmission of the payload data (36) at the higher data rate.

7. A method according to claim 1 wherein devices use network devices using a Carrier Sense, Multiple Access/ Collision Detection protocol.

8. A method according to claim 7 wherein the Carrier Sense, Multiple Access/ Collision Detection protocol also uses Collision Avoidance.

9. A method according to claim 1 wherein the transmission of payload data (36) at the higher data rate uses Manchester encoding.

10. A method according to claim 1 wherein the transmission of data at the higher data rate uses 8B/10B encoding.

11. A method according to claim 1 wherein the transmission of data at the higher data rate is used for transmission of one or more of the group: firmware for updates of the devices; configuration parameters for devices on the network; bulk data, audio; or video information.

12. A method according to claim 1 wherein during the transmission of data at the higher data rate there is a time division multiplexed communication period having time slots for each device synchronised by a single synchronising clock referred to by the network.

13. A method according to claim 1 wherein the maintain-media-busy-signal is transmitted before some or all of the higher data rate data and is used by the transmitting and receiving devices as a synchronising signal for the reception of the higher data rate data for some or all of the remainder of that slot.

14. A method according to claim 1 which comprises the further step:
decoding, in a receiver of a device, the payload data (36) transmitted at the higher data rate indicated within the frame information portion (34), using a clock signal recovered from the data sent at a higher data rate.

## Patentansprüche

1. Verfahren zum Kommunizieren von Daten in einem Kommunikationsnetzwerk mit paketvermittelter Basisband-Signalgebung, wobei das Netzwerk mehrere Vorrichtungen (14, 16, 18, 20) aufweist, wobei jede Vorrichtung zumindest eine Datenübertragungseinrichtung und eine Datenempfangseinrichtung umfasst, die imstande sind, Frames mit Nutzdaten zumindest mit einer ersten Datenrate zu übertragen und zu empfangen, wobei das Verfahren die Schritte umfasst:
Übertragen, mittels einer Übertragungseinrichtung einer Vorrichtung der mehreren Vorrichtungen, von Daten (25) mit einer ersten Datenrate in einem Teil eines Frame, der angibt, dass die Nutzdaten (36), die später in dem Frame übertragen werden sollen, mit einer höheren Datenrate als der ersten Datenrate übertragen werden;
**gekennzeichnet durch**
Übertragen, mittels der Übertragungseinrichtung der Vorrichtung, eines Maintain-Media-Busy-Signals, das den anderen Vorrichtungen der mehreren Vorrichtungen anzeigt, dass das Netzwerk genutzt wird, mit der ersten Datenrate während der Übertragung der Nutzdaten (36) mit der höheren Datenrate.

2. Verfahren nach Anspruch 1, wobei der Frame einen Frame-Informationsteil (34) umfasst, wobei das Verfahren ferner umfasst:
Empfangen, an einer Empfangseinrichtung der Vorrichtung von einer Übertragungseinrichtung einer oder mehrerer der anderen Vorrichtungen, einer Angabe der höchsten Datenrate, die die Empfangseinrichtung einer jeweiligen Vorrichtung empfangen kann, wobei diese Angabe in der Bestätigung enthalten ist, die als Antwort auf einen Empfang zumindest eines Teils des Frame-Informationsteils (34) des Frame hin zu der Empfangseinrichtung der Vorrichtung zurück übertragen wird.

3. Verfahren nach Anspruch 2, umfassend den weiteren Schritt
Bestimmen, aus der einen oder den mehreren empfangenen Bestätigungsanzeigen, der zu verwendenden höheren Datenrate, wenn die Nutzdaten (36) übertragen werden.

4. Verfahren nach Anspruch 1, umfassend die weiteren Schritte:
Verwenden einer Rate, um Nutzdaten (36) mit der höheren Datenrate zu übertragen; und
Lokalisieren einer Darstellung der Rate im Frame vor der Übertragung der Nutzdaten (36) mit der höheren Datenrate.

5. Verfahren nach Anspruch 1, umfassend die weiteren Schritte:
Verwenden eines Fehlererkennungs-Codes, um Nutzdaten (36) mit der höheren Datenrate zu übertragen; und
Lokalisieren einer Darstellung des Fehlererkennungs-Codes im Frame vor der Übertragung der Nutzdaten (36) mit der höheren Datenrate.

6. Verfahren nach Anspruch 1, umfassend die weiteren Schritte:
Verwenden eines Codierungsschemas, um Nutzdaten (36) mit der höheren Datenrate zu übertragen; und
Lokalisieren einer Darstellung des Codierungsschemas im Frame vor der Übertragung der Nutzdaten (36) mit der höheren Datenrate.

7. Verfahren nach Anspruch 1, wobei Vorrichtungen Netzwerkvorrichtungen verwenden, die ein Protokoll eines Vielfachzugriffverfahrens mit Leitungsabfrage und Kollisionserkennung nutzen.

8. Verfahren nach Anspruch 7, wobei das Protokoll eines Vielfachzugriffsverfahrens mit Leitungsabfrage und Kollisionserkennung auch eine Kollisionsvermeidung nutzt.

9. Verfahren nach Anspruch 1, wobei die Übertragung von Nutzdaten (36) mit der höheren Datenrate eine Manchester-Codierung nutzt.

10. Verfahren nach Anspruch 1, wobei die Übertragung von Daten mit der höheren Datenrate eine 8B/10B-Codierung nutzt.

11. Verfahren nach Anspruch 1, wobei die Übertragung von Daten mit der höheren Datenrate für eine Übertragung eines oder mehrerer der Gruppe aus: Firmware für Updates der Vorrichtungen; Konfigurationsparameter für Vorrichtungen auf dem Netzwerk; Massendaten; Audio; oder Videoinformation genutzt wird.

12. Verfahren nach Anspruch 1, wobei es während einer Übertragung von Daten mit der höheren Datenrate eine Periode einer Zeitmultiplex-Kommunikation mit Zeitfenstern für jede Vorrichtung gibt, die durch einen einzigen synchronisierenden Takt synchronisiert werden, auf den durch das Netzwerk referenziert wird.

13. Verfahren nach Anspruch 1, wobei das Maintain-Media-Busy-Signal vor einigen oder allen Daten mit der höheren Datenrate übertragen wird und von den übertragenden und empfangenden Vorrichtungen als synchronisierendes Signal für den Empfang der Daten mit der höheren Datenrate für einen gewissen Teil oder den ganzen Rest dieses Fensters verwendet wird.

14. Verfahren nach Anspruch 1, welches den weiteren Schritt umfasst:
Decodieren, in einer Empfangseinrichtung einer Vorrichtung, der Nutzdaten (36), die mit der höheren Datenrate übertragen wurden, die innerhalb des Frame-Informationsteils (34) angegeben ist, unter Verwendung eines Taktsignals, das aus den mit einer höheren Datenrate gesendeten Daten wiedererlangt wird.

## Revendications

1. Procédé de communication de données dans un réseau de communication de signalisation en bande de base à commutation de paquets, le réseau comportant plusieurs dispositifs (14, 16, 18, 20), chaque dispositif comprenant au moins un émetteur de données et un récepteur de données capable de transmettre et de recevoir des trames comprenant des données de charge utile au moins à un premier débit de données, le procédé comprenant les étapes consistant à :
transmettre, par un émetteur d'un dispositif desdits plusieurs dispositifs, des données (25) à un premier débit de données dans une partie d'une trame indiquant que les données de charge utile (36) à transmettre par la suite dans la trame seront transmises à un débit de données plus élevé que le premier débit de données ;
**caractérisé par** l'étape consistant à
transmettre, par l'émetteur du dispositif, un signal « maintenir le support occupé », indiquant aux autres dispositifs desdits plusieurs dispositifs que le réseau est en cours d'utilisation, au premier débit de données pendant la transmission des données de charge utile (36) au débit de données plus élevé.

2. Procédé selon la revendication 1, dans lequel la trame comprend une partie d'informations de trame (34), le procédé comprenant en outre les étapes consistant à :
recevoir à un récepteur du dispositif, d'un émetteur d'un ou plusieurs des autres dispositifs, une indication du débit de données plus élevé que le récepteur d'un dispositif respectif peut recevoir, cette indication étant incluse dans l'accusé de réception transmis en retour au récepteur du dispositif en réponse à la réception d'au moins une partie de la partie d'informations de trame (34) de la trame.

3. Procédé selon la revendication 2, comprenant l'étape supplémentaire consistant à :
déterminer, à partir desdites une ou plusieurs indications d'accusé de réception reçues, le débit de données plus élevé à utiliser lors de la transmission des données de charge utile (36).

4. Procédé selon la revendication 1, comprenant les étapes supplémentaires consistant à :
utiliser un débit pour transmettre des données de charge utile (36) au débit de données plus élevé ; et
localiser une représentation du débit dans la trame avant la transmission des données de charge utile (36) au débit de données plus élevé.

5. Procédé selon la revendication 1 comprenant les étapes supplémentaires consistant à :
utiliser un code de détection d'erreur pour transmettre des données de charge utile (36) au débit de données plus élevé ; et
localiser une représentation du code de détection d'erreur dans la trame avant la transmission des données de charge utile (36) au débit de données plus élevé.

6. Procédé selon la revendication 1, comprenant les étapes supplémentaires consistant à :
utiliser un schéma de codage pour transmettre des données de charge utile (36) au débit de données plus élevé ; et
localiser une représentation du schéma de codage dans la trame avant la transmission des données de charge utile (36) au débit de données plus élevé.

7. Procédé selon la revendication 1, dans lequel les dispositifs utilisent des dispositifs de réseau utilisant un protocole d'accès multiple avec écoute de porteuse et détection de collisions (CSMA/CD).

8. Procédé selon la revendication 7, dans lequel le protocole d'accès multiple avec écoute de porteuse et détection de collision utilise également l'évitement de collisions (CA).

9. Procédé selon la revendication 1, dans lequel la transmission de données de charge utile (36) au débit de données plus élevé utilise un codage Manchester.

10. Procédé selon la revendication 1, dans lequel la transmission de données au débit de données plus élevé utilise un codage 8B/10B.

11. Procédé selon la revendication 1, dans lequel la transmission de données au débit de données plus élevé est utilisée pour la transmission d'un ou plusieurs éléments du groupe : firmware pour les mises à jour des dispositifs ; paramètres de configuration des dispositifs sur le réseau ; données en masse, informations audio ou vidéo.

12. Procédé selon la revendication 1, dans lequel pendant la transmission de données au débit de données plus élevé, il y a une période de communication multiplexée par répartition dans le temps avec des créneaux temporels pour chaque dispositif synchronisé par une seule horloge de synchronisation à laquelle le réseau se réfère.

13. Procédé selon la revendication 1, dans lequel le signal « maintenir le support occupé » est transmis avant une partie ou la totalité des données au débit de données plus élevé et est utilisé par les dispositifs d'émission et de réception comme un signal de synchronisation pour la réception des données au débit de données plus élevé pour une partie ou la totalité du reste de ce créneau.

14. Procédé selon la revendication 1, comprenant l'étape supplémentaire consistant à :
décoder, dans un récepteur d'un dispositif, les données de charge utile (36) transmises au débit de données plus élevé indiqué dans la partie d'informations de trame (34), en utilisant un signal d'horloge récupéré à partir des données envoyées à un débit de données plus élevé.
